# EUROPEAN PATENT APPLICATION

(11) **EP 4 622 177 A1**
(43) Date of publication of application: **24.09.2025**
(21) Application number: 25156123.9
(22) Date of filing: 06.02.2025
(51) Int. Cl.: H04L 9/40

(54) **SECURITY PROTOCOL PROXY FOR AN OPERATIONAL TECHNOLOGY SYSTEM**

(30) Priority: 22.03.2024 US 202418613663
(71) Applicant: Schneider Electric USA, Inc., Andover, MA 01810 (US)
(72) Inventor: Pyle, Michael William, Boston, Massachusetts, 02108 (US); Paillet, Daniel Andre, Boston, Massachusetts, 02108 (US)
(74) Representative: Manitz Finsterwald Patent- und Rechtsanwaltspartnerschaft mbB

(57) **Abstract**

A firewall and/or security appliance is provided between an external network or zone (network/zone) and an internal network/zone having a processing device configured to perform operations including receiving or transmitting inbound and outbound messages of network traffic between the external network/zone, an external port connected to the external network/zone supporting at least one secure protocol, and an internal port connected to the internal network/zone not supporting the at least one secure protocol, and providing firewall and/or security protection for filtering and/or monitoring the network traffic, including adding or removing encryption and/or first applicable security aspects of the at least one secure protocol before transmitting a message depending on whether the message is an inbound or outbound message.

## Description

### TECHNICAL FIELD

The present disclosure relates to security of operational technology systems, and more particularly, to a security protocol proxy for an operational technology system.

### BACKGROUND

Malware targeting operational technology (OT) systems is on the rise. Malware can migrate its way into OT systems via machines that use Microsoft Windows and Linux machines via OT devices. To counteract this vulnerability, secure OT protocols have been established. However, it takes time for the secure OT protocols to be implemented in all OT devices. In many OT systems, legacy OT devices are installed that are not yet updated, or will never be upgraded to use the secure OT protocols. Malware can leverage OT devices that use insecure protocols.

One solution to protect OT devices that do not use secure OT protocols (also referred to as an insecure OT device) is to provide protection devices, such as a separate appliance or dongle with two or more communication ports, that support one or more secure protocols on a first port and translates the secure protocol to a "non-secured" version of the protocol on a second port connected to the OT device. Such protection devices are also referred to as a "bump-in-the-wire." These protection devices are often used on a one-to-one basis, with a protection device provided in front of each insecure OT device. The addition of these protection devices adds extra complication and costs, which can hinder their adoption of by the market. For example, the protection devices themselves add cost and consume additional power. Installation of protection devices can be complex and costly.

While conventional methods and systems for protecting OT systems that use insecure OT devices have been considered satisfactory for their intended purposes, there is still a need in the art to provide security to insecure OT devices with reduced or minimal costs and complications.

### SUMMARY

The purpose and advantages of the below described illustrated embodiments will be set forth in and apparent from the description that follows. Additional advantages of the illustrated embodiments will be realized and attained by the devices, systems and methods particularly pointed out in the written description and claims hereof, as well as from the appended drawings. To achieve these and other advantages and in accordance with the purpose of the illustrated embodiments, in one aspect, disclosed is a firewall and/or security appliance provided between an external network or zone (network/zone) and an internal network/zone. The firewall and/or security appliance includes a memory configured to store a plurality of programmable instructions and a processing device in communication with the memory, wherein the processing device, upon execution of the plurality of programmable instructions is configured to perform operations. The operations include receiving or transmitting inbound messages of network traffic between the external network/zone and the internal network/zone at an external port connected to the external network/zone, wherein the external network/zone includes at least one external module that is capable of supporting or configured to support at least one secure protocol.

The operations further include receiving or transmitting outbound messages of the network traffic at an internal port connected to the internal network/zone, wherein the internal network/zone includes a plurality of internal modules, at least one of which is not capable of supporting or configured to support the at least one secure protocol.

The operations further include providing firewall and/or security protection for filtering and/or monitoring the network traffic. The operations further include, for an inbound message received at the external port from a source external module of the at least one external module, removing encryption and/or first applicable security aspects of the at least one secure protocol before transmitting the inbound message via the internal port to a destination internal module of the plurality of internal modules, and/or for an outbound message received at the internal port from a source internal module of the plurality of internal modules, adding encryption and/or second applicable security aspects of the at least one secure protocol before transmitting the outbound message via the external port to a destination external module of the at least one external module.

In one or more embodiments, the operations can further include storing in association with identification of each of the plurality of internal modules an indication of the internal module's security capability for supporting the at least one secure protocol, determining the security capability of the destination internal module identified in each inbound message, and removing the encryption and/or the first applicable security aspects before transmitting the inbound message via the internal port to the destination internal module only if the determination of the security capability is that the destination internal module has inadequate security capability for processing the inbound message with the encryption and/or the first security aspects.

In one or more embodiments, the operations can further include storing in association with identification of each of the plurality of internal modules an indication of the internal module's security capability for supporting the at least one secure protocol, determining the security capability of a source module of the plurality of internal modules identified in each outbound message, and adding the encryption and/or the second applicable security aspects before transmitting the outbound message via the external port to a destination external module of the at least one external module only if the determination of the security capability is that the source internal module has inadequate security capability for providing the outbound message with the encryption and/or the first applicable security aspects.

In one or more embodiments, the external network/zone and internal network/zone can be included within an operational technologies (OT) system.

In one or more embodiments, the at least one external module can include at least one supervisory and/or control module and/or one or more other modules that are not included in the internal network/zone.

In one or more embodiments, the plurality of internal modules can be operational-technology modules.

In accordance with further aspects of the disclosure an operational technologies (OT) system is provided. The OT system includes an external network/zone having at least one external module that is capable of supporting or configured to support at least one secure protocol, an internal network/zone having a plurality of internal modules, at least one of which is not capable of supporting or configured to support the at least one secure protocol, and a firewall and/or security appliance includes a memory configured to store a plurality of programmable instruction, and a processing device in communication with the memory. The processing device, upon execution of the plurality of programmable instructions is configured to perform operations.

The operations include receiving or transmitting inbound messages of network traffic between the external network/zone and the internal network/zone at an external port connected to the external network/zone, receiving or transmitting outbound messages of the network traffic at an internal port connected to the internal network/zone, and providing firewall protection for filtering and/or monitoring network traffic between the external network/zone and the internal network/zone.

The operations further include, for an inbound message received at the external port from a source external module of the at least one external module, removing encryption and/or first security aspects of the at least one secure protocol before transmitting the inbound message via the internal port to a destination internal module of the plurality of internal modules. The operations further include, for an outbound message received at the internal port from a source internal module of the plurality of internal modules, adding encryption and/or second applicable security aspects of the at least one secure protocol before transmitting the outbound message via the external port to a destination external module of the at least one external module.

In one or more embodiments, the operations can further include storing in association with identification of each of the plurality of internal modules an indication of the internal module's security capability for supporting the at least one secure protocol, determining the security capability of the destination internal module identified in each inbound message, and removing the encryption and/or the first applicable security aspects before transmitting the inbound message via the internal port to the destination internal module only if the determination of the security capability is that the destination internal module has inadequate security capability for processing the inbound message with the encryption and/or the first security aspects.

In one or more embodiments, the operations can further include storing in association with identification of each of the plurality of internal modules an indication of the internal module's security capability for supporting the at least one secure protocol, determining the security capability of a source module of the plurality of internal modules identified in each outbound message, and adding the encryption and/or the second applicable security aspects before transmitting the outbound message via the external port to a destination external module of the at least one external module only if the determination of the security capability is that the source internal module has inadequate security capability for providing the outbound message with the encryption and/or the second applicable security aspects.

In one or more embodiments, the at least one external module includes at least one supervisory and/or control module and/or one or more other modules that are not included in the internal network/zone.

In one or more embodiments, the plurality of internal modules are operational-technology modules.

In accordance with another aspect of the disclosure, a method is provided for performing the operations performed by the processing device of the firewall and/or security appliance is provided.

In accordance with another aspect of the disclosure, a method is provided for performing the operations performed by the processing device of the OT system is provided.

In accordance with still a further aspect of the disclosure, a non-transitory computer readable storage medium and one or more computer programs embedded therein is provided, which when executed by a computer system, cause the computer system to perform the disclosed operations performed by the processing device of the firewall and/or security appliance.

In accordance with still a further aspect of the disclosure, a non-transitory computer readable storage medium and one or more computer programs embedded therein is provided, which when executed by a computer system, cause the computer system to perform the disclosed operations performed by the processing device of the OT system.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

A more detailed description of the disclosure, briefly summarized above, may be had by reference to various embodiments, some of which are illustrated in the appended drawings. While the appended drawings illustrate select embodiments of this disclosure, these drawings are not to be considered limiting of its scope, for the disclosure may admit to other equally effective embodiments.
FIGS. 1 and 2 are block diagrams illustrating an operational system having a firewall and/or security appliance acting as a secure protocol proxy disposed between external and internal networks, in accordance with aspects of the disclosure.
FIG. 3 is a block diagram of a firewall and/or security appliance acting as a secure protocol proxy disposed between external and internal networks of an operational system, in accordance with aspects of the disclosure.
FIG. 4 is a flowchart that illustrates an example method used by a firewall and/or security appliance acting as a secure protocol proxy that is disposed between external and internal networks of an operational system, in accordance with aspects of the disclosure;
FIG. 5 is a flowchart that illustrates an example method used for adding or removing encryption and/or other security aspects by the used by an operational system having a firewall acting as a secure protocol proxy disposed between external and internal networks, in accordance with aspects of the disclosure; and
FIG. 6 is a block diagram of an exemplary computer system that could be used as an implementation in a firewall and/or security appliance acting as a secure protocol proxy disposed between external and internal networks of an operational system, in accordance with aspects of the disclosure.

Identical reference numerals have been used, where possible, to designate identical elements that are common to the figures. However, elements disclosed in one embodiment may be beneficially utilized on other embodiments without specific recitation.

### DETAILED DESCRIPTION

The term "firewall" as used throughout the application can refer to only a firewall, or can refer to a security appliance with a firewall-type capability. The firewall-type capability can include monitoring and/or filtering communication. The term "firewall" can be used interchangeably with the term "firewall and/or security appliance."

The present disclosure provides an operational technology system having at least one external network and/or zone (also denoted as network/zone), and at least one internal network/zone, and a firewall and/or security appliance that monitors and/or filters all communication between any of the external networks/zones and any of the internal networks/zones. The external network/zone includes external modules that are capable of supporting at least one secure protocol. The internal network/zone includes a plurality of internal modules, at least one of which is not capable of supporting the at least one secure protocol. The firewall and/or security appliance includes a secure proxy module, that for an inbound message received from a source external module of the external network/zone, removes encryption and/or first applicable security aspects of the secure protocol(s) before transmitting the inbound message via the internal port to the at least one internal module that is not capable of supporting the secure protocol(s). Alternatively, or in addition, the secure proxy module for an outbound message received from a source internal module of the internal network/zone, adds encryption and/or second applicable security aspects (which can be the same as or different from the first security aspects) of the at least one secure protocol in accordance with the secure protocol(s) before transmitting the outbound message via the external port to a destination external module of the external network/zone.

The removal of encryption and/or the first applicable security aspects is only performed for inbound messages directed to the at least one internal module that is not capable of supporting the encryption and/or first security aspects of the at least one secure protocol, and is not performed for inbound messages directed to other internal modules of the internal networks/zones capable of supporting the at least one secure protocol.

The addition of encryption and/or the second applicable security aspects is only performed for outbound messages from the at least one internal module that is not capable of supporting the at least one secure protocol, and is not performed for outbound messages from other internal modules of the internal networks/zones capable of supporting the at least one secure protocol.

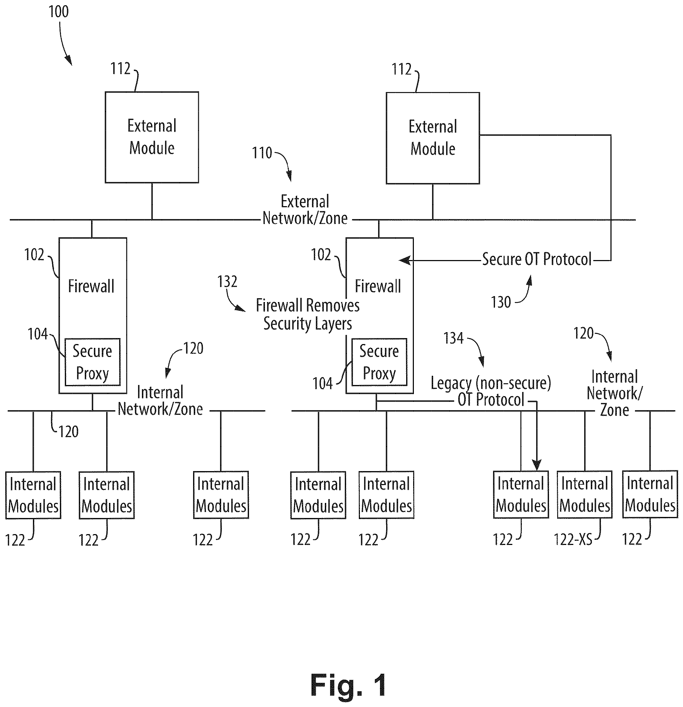

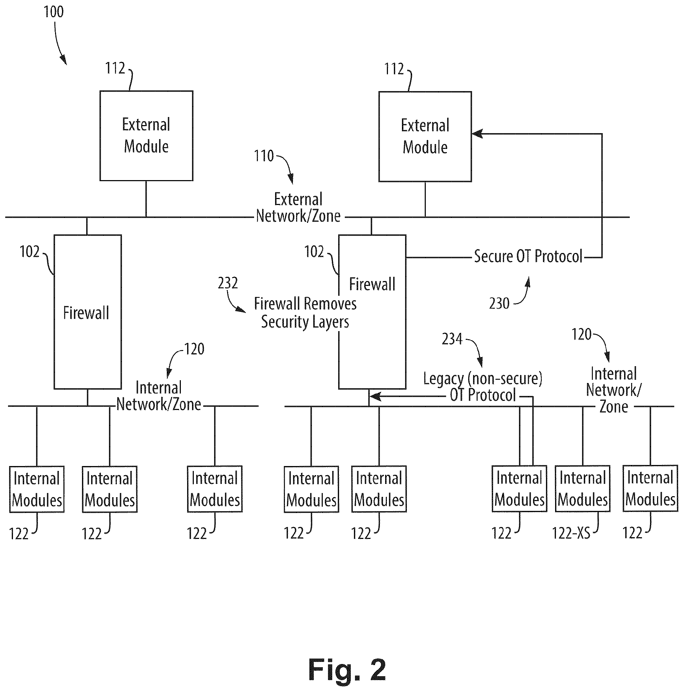

Reference will now be made to the drawings wherein like reference numerals identify similar structural features or aspects of the subject disclosure. For purposes of explanation and illustration, and not limitation, a block diagram of an exemplary embodiment of an operational system in accordance with the disclosure is shown in FIG. 1 and is designated generally by reference character 100. Other embodiments of operational system 100 in accordance with the disclosure, or aspects thereof, are provided in FIGS. 2-6, as will be described.

Unless defined otherwise, all technical and scientific terms used herein have the same meaning as commonly understood by one of ordinary skill in the art to which this disclosure belongs. Although any methods and materials similar or equivalent to those described herein can also be used in the practice or testing of the present disclosure, exemplary methods and materials are now described.

It must be noted that as used herein and in the appended claims, the singular forms "a", "an," and "the" include plural referents unless the context clearly dictates otherwise. Thus, for example, reference to "a stimulus" includes a plurality of such stimuli and reference to "the signal" includes reference to one or more signals and equivalents thereof known to those skilled in the art, and so forth. It is to be appreciated the embodiments of this disclosure as discussed below are implemented using a software algorithm, program, or code that can reside on a computer useable medium for enabling execution on a machine having a computer processor. The machine can include memory storage configured to provide output from execution of the computer algorithm or program.

As used herein, the term "software" is meant to be synonymous with any logic, code, or program that can be executed by a processor of a host computer, regardless of whether the implementation is in hardware, firmware or as a software computer product available on a memory storage device or for download from a remote machine. The embodiments described herein include such software to implement the equations, relationships, and algorithms described above. One skilled in the art will appreciate further features and advantages of the disclosure based on the above-described embodiments. Accordingly, the disclosure is not to be limited by what has been particularly shown and described, except as indicated by the appended claims.

FIGS. 1 and 2 show an operational technologies system 100 that includes one or more firewalls 102. Each firewall 102 is a firewall and/or security appliance. Each firewall 102 is coupled between at least one external network/zone 110 and at least one internal network/zone 120 to provide firewall and/or security protection for monitoring and/or filtering communications exchanged between the at least one external network/zone 110 and the at least one internal network/zone 120. Inbound messages are messages that are sent from one of the external networks/zones 110 to one of the internal networks/zones 120. Outbound messages are messages that are sent from one of the internal networks/zones 120 to one of the external networks/zones 110. Each inbound and outbound message passes via one of firewalls 102.

OT system 100 can include, for example, an industrial system, a data center, a utility system, a hospital system, etc. OT system 100 can comply with the Purdue model, in which external networks/zones 110 are included in level 2 (for supervisory and control) of the Purdue model, which is separated by firewall 102 from internal networks/zones 120, which are included in level 1 (for control and monitoring) of the Purdue model.

External network(s)/zone(s) 110 include external modules 112. Different subsets of external networks 110 can be segmented into different groups, also referred to as zones. The external network(s)/zone(s) 110 can include, for example and without limitation, one or more of any of an information technology network, enterprise zone, business logistics system, cloud access, third-party support, Ethernet network, private or public network, local area network (LAN), wide area network (WAN), and a demilitarized zone (DMZ). External modules 112 can include, for example and without limitation, a supervisory control and data acquisition (SCADA) module, a control module (e.g., programmable logic controllers, etc.), an edge device, etc. Each external module 112 can be a device and/or a software module, local or remote relative to the firewall 102, real or virtual, as long as it is not included in any of internal networks/zones 120.

The external modules 112 are capable of supporting at least one secured protocol, which can include cryptography and/or other security aspects, such as role based access control (RBAC), etc. The external modules 112 include hardware, software, and/or firmware to support the at least one secured protocol, and therefore can be configured to support the at least one secured protocol.

Some examples of the secured protocol include protocols for an OT environment, such as Secure Modbus/TCP^{™} and BACnet/SC^{™}.

Internal network(s)/zone(s) 120 include a plurality of internal modules 122. The internal network(s)/zone(s) are included in a trust zone, and can include, for example and without limitation, an industrial network or OT network. The trust zone can include modules and systems (including additional networks) that should not be accessed by any non-authorized external entity (e.g., device, process, or person, etc.) that is outside of the trust zone. Any access to the trust zone from an external entity is limited via firewall 102.

Internal modules 122 can include, for example and without limitation, one or more of any of a system for management and/or maintenance of a plant, laboratory, etc.; a control, data acquisition, and/or supervisory system; real-time controls; human-machine interface (HMI); intelligent devices for sensing and/or manipulating a physical process (any of which can include, for example, one or more of any of a circuit breaker; motor-control center; gateway; PLC; safety system; building management controller; edge device; field device (e.g., sensor, actuator, or alarm), etc.). An internal module 112 can be a device and/or a software module that is real or virtual, and can be local or remote, as long as it is included in any of internal networks/zones 120 and can only communicate with an external entity via firewall 102. In certain embodiments, one or more of internal modules 122 can be an APL device that uses a two-wire APL connection and communicates via Ethernet-APL.

Additionally, different subsets of internal networks 120 can be segmented into different groups. These groups can be referred to as zones.

At least one of the internal modules 122, shown as insecure internal module 122-XS, is not capable of supporting and/or is not configured to support the secure protocol(s). For example, insecure internal module 122-XS can be a legacy module that does not include the infrastructure (hardware, software, and/or firmware) needed to support the secure protocol(s). Even if insecure internal module 122-XS includes the infrastructure needed to support the secure protocol(s), these may be temporarily or permanently inoperable, such as due to a malfunction, need for an upgrade, etc. In certain OT systems 100, it is possible that a large proportion or all of the internal modules 122 are insecure internal module 122-XS. Since an OT system 100 can have many internal modules 122, there can be a very large number of internal modules 122 that are not capable of or are not configured to support the secure protocol.

Firewall(s) 102 can operate in one or more statuses that can change periodically or in response to a condition (e.g., an event or command). Depending on the status, firewall(s) 102 can block all communication when in a closed status, allow all communication when in an open status, or monitor and/or filter all communication when in a firewall and/or security status. The disclosed method refers to handling communications to and/or from firewall(s) 102 when operating in the firewall and/or security status. Different or same statuses can be used for inbound or outbound directions. In one or more embodiments, firewall(s) 102 operate permanently in the firewall and/or security status in the inbound and/or outbound directions.

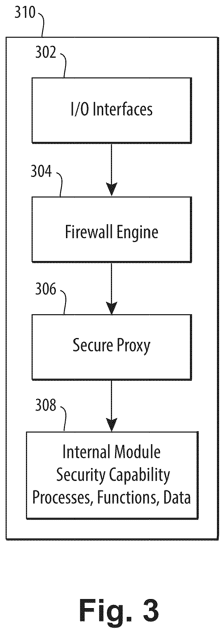

With additional reference to FIG. 3, each firewall 102 includes input/output (I/O) interfaces 302, a firewall engine 304, and a secure proxy 306, as well as access to internal module security capability processes, functions, and data 308. The respective one or more firewall(s) 102 can each be standalone devices. Each firewall 102 can be isolated and separate from other firewall(s) 102.

I/O interfaces 302 include hardware, software, and/or firmware for input/output (I/O) for coupling to and interfacing with external network(s) 110 and internal network(s) 120. For example, firewall(s) 102 can have internal ports for exchanging messages with internal modules 122, and can have external ports for exchanging messages with external modules 112. In certain embodiments, the internal ports can include two-wire connections that are compatible with internal modules 122 that are APL devices and require a two-wire device.

The exchanged communication includes inbound secure or outbound non-secure communication. The inbound secure communication is received from a source external module 112, filtered through a firewall engine 106 for providing the isolation, translated to the appropriate non-secure protocol, and is then passed to a destination internal module 122. The outbound non-secure communication is received from a source internal module 122, translated to the appropriate secure protocol, passed through firewall engine 106 for providing the isolation, and is then passed to a destination external module 112 (meaning outbound secure communications).

For inbound communication, translating to a non-secure protocol can include removing encryption or other security aspects, such as bypassing RBAC requirements. For example, when RBAC information is included in a certificate associated with communications using a secure protocol (e.g., Modbus^{®} TCP Security protocol), removal of the security aspects can include refraining from including the certificate with the communication when passing the communication to the destination internal module 122. Removal of the certificate from the communication effectively bypasses previously existing RBAC requirements.

For outbound communication, translating to a secure protocol can include adding encryption or other security aspects, such as adding RBAC requirements For example, adding security aspects can include adding to the output communication a certificate with information about the source internal module 122 before providing the output communication to the destination external module 112.

Firewall engine 304 includes hardware, software, and/or firmware for isolating external network(s)/zone(s) 110 from internal network(s)/zone(s) 112. Firewall engine 304 can further monitor, filter, and/or apply security aspects to the inbound and/or outbound communication.

Secure proxy 306 includes hardware, software, and/or firmware for inspecting messages of the exchanged communication, determining if a source internal module 122 or a source external module 112 is an insecure device, and if so, adding or removing security layers as described further below. Prior to removing any security layers, secure proxy 306 is configured to validate the security layers. Secure proxy 306 is integral with (e.g., embedded within) the firewall/security appliance 102 to which it belongs, meaning it can be disposed within a housing 310 of the firewall/security appliance 102.

Internal module security capability data 308 is a collection of data that associates an identification of each of the at least one internal module(s) 122 with which the corresponding firewall 102 communicates and a security capability level of the identified internal module 122. Internal module security capability data 308 can be stored by firewall 102 or can be accessed by the firewall 102 in a secure manner, such as by a dedicated coupling (e.g., a cable or wireless coupling) that maintains isolation required by firewall 102.

FIG. 1 illustrates a sequence of actions performed when an inbound secure message is transmitted using a secure OT protocol by an external module 122 to a destination insecure internal module 122-XS. At sequence 130, the inbound message is transmitted by an external module 112. The inbound message has security layers used by the secure OT protocol. At sequence 132, secure proxy 306 authenticates, authorizes, or otherwise validates the secure protocol used and then removes the security layers (also referred to as a "security wrapper") from the message. At sequence 134, secure proxy 306 sends the unwrapped message to the destination insecure internal module 122-XS using an insecure OT protocol, e.g., a legacy OT protocol.

FIG. 2 illustrates a sequence of actions performed when an outbound secure message is transmitted using an insecure OT protocol (e.g., a legacy OT protocol) by a source insecure internal module 122-XS to an external module 122. At sequence 230, the outbound message is transmitted by the source insecure internal module 122-XS. The outbound message does not have security layers needed for the secure OT protocol used by the destination external module 122. At sequence 232, secure proxy 306 adds security layers associated with a secure protocol to the message. At sequence 234, secure proxy 306 sends the wrapped message to the external module 112 using the secure OT protocol.

Firewall(s) 102 can store and/or access, in association with identification of each of the internal modules 122, an indication of the internal module 122's security capability for supporting secure protocol(s). When receiving an inbound message that is enroute to a destination internal module 122 or an outbound message sent from a source internal module 122 that is enroute to an external module 112, a determination is made whether the source internal module 122 or destination internal model 122 is an insecure internal module 122-XS. For inbound messages, secure proxy 306 only removes the security layers when it is determined that the destination internal module 122 is an insecure internal module 122-XS. For outbound messages, secure proxy 306 only adds the security layers when it is determined that the source internal module 122 is an insecure internal module 122-XS. The removal or addition of the security layers is referred to as a security task.

The security layers can include, for example, encryption and/or applicable security aspects such as RBAC information. The security aspects used for the inbound and outbound messages can be same or different.

The process of determining that a source or destination of a message is an insecure internal module 122-XS can include performing packet inspection to determine an identity (e.g., address) of the source and/or destination, accessing internal module security capability data 308, selecting the security capability level data that corresponds to the identity of an internal module 122 that is a source or destination for the message, and determining whether the security capability level satisfies predetermined criteria. If the predetermined criteria are satisfied, the security capability level is adequate and secure proxy 306 need not perform any further action related to exchange of the message. If the predetermined criteria are not satisfied, secure proxy 306 can perform a security task.

Secure proxy 306's ability to identify messages sent to or from an insecure internal module 122-XS and act as a proxy by adding or removing security layers mitigates risks posed by malware by providing the capability for external modules 112 to use secure protocols, even when communicating with insecure internal modules 122-XS. This reduces the possibility or prevents malware from leveraging insecure protocols to infiltrate an insecure internal module 122-XS.

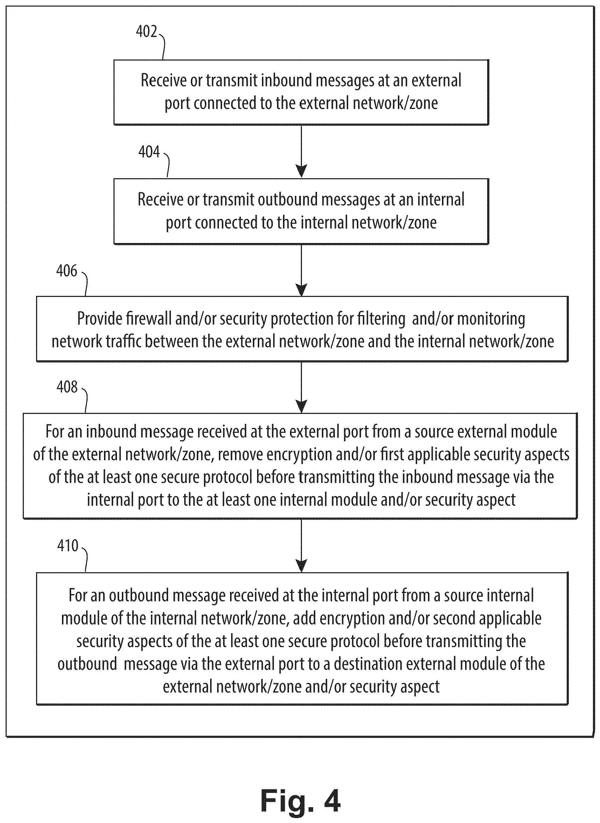

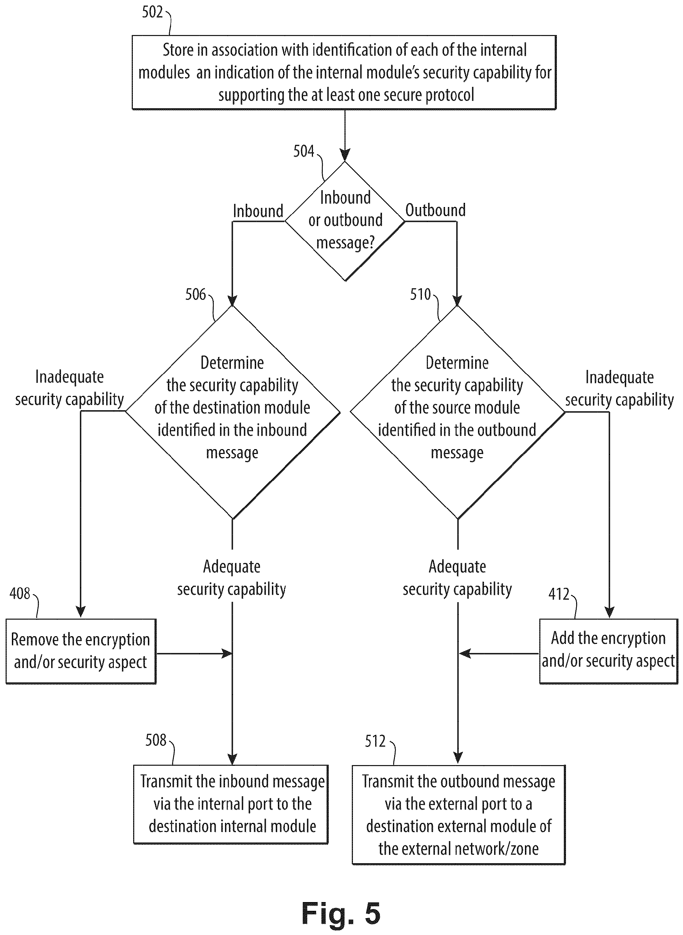

With reference now to FIGS. 4 and 5, shown are flowcharts demonstrating implementation of the various exemplary embodiments. It is noted that the order of operations shown in FIGS. 4 and 5 is not required, so in principle, the various operations may be performed out of the illustrated order. Also certain operations may be skipped, different operations may be added or substituted, some operations may be performed in parallel instead of strictly sequentially, or selected operations or groups of operations may be performed in a separate application following the embodiments described herein.

Language that refers to the exchange of information is not meant to be limiting. FIG. 4 shows a flowchart 400 of an example method performed by an appliance that provides firewall and/or security protection, such as firewall 102 shown in FIG. 1. At block 402, the firewall and/or security appliance receives or transmits inbound messages of network traffic between an external network/zone (such as external network/zone 110 shown in FIG. 1) at an external port connected to the external network. The external network/zone includes one or more external modules (such as external modules 112 shown in FIG. 1) that are capable of supporting or configured to support at least one secure protocol.

At block 404, the firewall and/or security appliance receives or transmits outbound messages of the network traffic at an internal port connected to the internal network/zone (such as internal network/zone 120 shown in FIG. 1). The internal network/zone includes a plurality of internal modules (such as internal modules 122 shown in FIG. 1), including internal modules that are not capable of supporting or not configured to support at least one secure protocol.

At block 406, the firewall and/or security appliance provides firewall and/or security protection for filtering and/or monitoring the network traffic.

At block 408, for an inbound message received at the external port from a source external module of the external network/zone, the firewall and/or security appliance removes encryption and/or first applicable security aspects of the at least one secure protocol before transmitting the inbound message via the internal port to a destination internal module of the plurality of internal modules.

At block 410, for an outbound message received at the internal port from a source internal module of the plurality of internal modules, the firewall and/or security appliance adds encryption and/or second applicable security aspects of the at least one secure protocol before transmitting the outbound message via the external port to a destination external module of the at least one external module.

With reference to FIG. 5, an example method is shown when adding or removing the encryption and/or other security aspects from messages as shown in blocks 408 and 410 of FIG. 4, in accordance with one or more embodiments of the disclosure. At block 502, the firewall and/or security appliance stores in association with identification of each of the internal modules an indication of the corresponding internal module's security capability for supporting the at least one secure protocol. At block 504, the firewall and/or security appliance determines whether the message being processed is an inbound or outbound message.

If the message is an inbound message, then at block 506 the firewall and/or security appliance determines the security capability of the destination module identified in the inbound message. If the security capability is determined to be adequate for handling the encryption and/or security aspects provided with the inbound message, then at block 508, the inbound message is transmitted via the internal port to the destination internal module. Adequacy for handling an inbound message that is encrypted indicates that the message can be decrypted. Adequacy for handling an inbound message to which the security aspect is applied indicates that a person and/or process with proper credentials or characteristics can be authenticated for accessing the inbound message.

Block 408 (also shown in FIG. 4) is only performed if the security capability is determined to be inadequate for handling the encryption and/or security aspects provided with the inbound message, meaning it would be incapable of decrypting or otherwise accessing the message. At block 408, the encryption and/or the first applicable security aspect is removed from the inbound message before proceeding to block 508 for transmission of the message via the internal port to the destination internal module.

If the message is an outbound message, then at block 510 the firewall and/or security appliance determines the security capability of the source module identified in the outbound message. If the security capability is determined to be adequate for handling the encryption and/or other security aspect provided with the outbound message, then at block 512, the outbound message is transmitted via the external port to a destination external module of the external network/zone. Adequacy for handling an outbound message that needs encryption indicates that a capability is provided for encrypting the outbound message. Adequacy for handling an outbound message the needs the security aspect to be applied indicates that a capability is provided for applying the security aspect to the outbound message, e.g., in order that only a person and/or process that receives the outbound message that can present proper credentials or characteristics can be authenticated for accessing the outbound message.

Block 410 (also shown in FIG. 4) is only performed if the security capability is determined to be inadequate for handling the encryption and/or security aspects provided with the outbound message, meaning it would be incapable of encrypting or providing expected security aspects to the message. At block 410, the encryption and/or the second applicable security aspect is added to the outbound message before proceeding to block 512 for transmission of the message via the internal port to a destination external module of the external network/zone.

Aspects of the present disclosure are described above with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions.

These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart(s) and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational operations to be performed on the computer, other programmable apparatus or other devices to produce a computer implemented process such that the instructions which execute on the computer or other programmable apparatus provide processes for implementing the functions/acts specified in the flowchart and/or block diagram block or blocks.

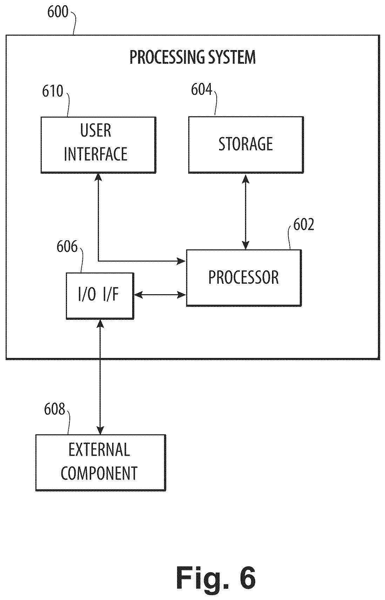

With reference to FIG. 6, a block diagram of an example processing system 600 is shown, which provides an example configuration of a Computing system used by firewall 102. Additionally, all or portions of the computing components of the firewall 102 could be configured as software, and processing system 600 could represent such portions. Processing system 600 is only one example of a suitable system and is not intended to suggest any limitation as to the scope of use or functionality of embodiments of the disclosure described herein. Processing system 600 can be implemented using hardware, software, and/or firmware. Regardless, processing system 600 is capable of being implemented and/or performing functionality as set forth in the disclosure.

Processing system 600 is shown in the form of a general-purpose computing device. Processing system 600 includes a (including plural referents) processing device 602, memory 604, an input/output (I/O) interface (I/F) 606 that can communicate with an internal component, such as a user interface 610, and optionally an external component 608.

In certain embodiments, processing device 602 can include, for example, a PLOD, microprocessor, DSP, a microcontroller, a field programmable gate array (FPGA), an application specific integrated circuit (ASIC) and/or other discrete or integrated logic circuitry having similar processing capabilities.

In certain embodiments, processing device 602 and the memory 604 can be included in components provided in an FPGA, ASIC, microcontroller, or microprocessor, for example.

Memory 604 can include, for example, volatile and non-volatile memory for storing data temporarily or long term, and for storing programmable instructions executable by the processing device 602. Memory 604 can be a removable (e.g., portable) memory for storage of program instructions. I/O I/F 606 can include an interface and/or conductors to couple to the one or more internal components 610 and/or external components 608.

In certain embodiments, I/O I/F 606 can include other non-Ethernet or wireless based communication technologies.

Embodiments of the computing components of the industrial system may be implemented or executed by one or more computer systems, such as a microprocessor. Each processing system 600 can be included within the computing components of the industrial system , or multiple instances thereof.

In certain embodiments, processing system 600 is embedded in a device, such as device A1 601, such as a firewall 102 shown in FIG. 1, e.g., a firewall, router, or security appliance. Portions of the processing system 600 can be provided externally, such by way of an interface.

Processing system 600 is only one example of a suitable system and is not intended to suggest any limitation as to the scope of use or functionality of embodiments of the disclosure described herein. Regardless, processing system 600 is capable of being implemented to perform any of the functionality set forth hereinabove.

Processing system 600 may be described in the general context of execution of computer system-executable instructions, such as program modules. Generally, program modules may include routines, programs, objects, components, logic, data structures, and so on that perform particular tasks or implement particular abstract data types.

The disclosed method and system potentially provide advantages that can include mitigation of risk from malware and other forms of cyber-attack. Additional costs can be minimal, since it leverages firewall and/or security appliances that are already installed to provide the isolation needed between external network(s)/zone(s) 110 and internal network(s)/zone(s) 120.

In the preceding, reference is made to various embodiments. However, the scope of the present disclosure is not limited to the specific described embodiments. Instead, any combination of the described features and elements, whether related to different embodiments or not, is contemplated to implement and practice contemplated embodiments. Furthermore, although embodiments may achieve advantages over other possible solutions or over the prior art, whether or not a particular advantage is achieved by a given embodiment is not limiting of the scope of the present disclosure. Thus, the preceding aspects, features, embodiments and advantages are merely illustrative and are not considered elements or limitations of the appended claims except where explicitly recited in a claim(s).

The various embodiments disclosed herein may be implemented as a system, method or computer program product. Accordingly, aspects may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects may take the form of a computer program product embodied in one or more computer-readable medium(s) having computer-readable program code embodied thereon.

Any combination of one or more computer-readable medium(s) may be utilized. The computer-readable medium may be a non-transitory computer-readable medium. A non-transitory computer-readable medium may be, for example, but not limited to, an electronic, magnetic, optical, electromagnetic, infrared, or semiconductor system, apparatus, or device, or any suitable combination of the foregoing. More specific examples (a non-exhaustive list) of the non-transitory computer-readable medium can include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. Program code embodied on a computer-readable medium may be transmitted using any appropriate medium, including but not limited to wireless, wireline, optical fiber cable, RF, etc., or any suitable combination of the foregoing.

Computer program code for carrying out operations for aspects of the present disclosure may be written in any combination of one or more programming languages. Moreover, such computer program code can execute using a single computer system or by multiple computer systems communicating with one another (e.g., using a local area network (LAN), wide area network (WAN), the Internet, etc.). While various features in the preceding are described with reference to flowchart illustrations and/or block diagrams, a person of ordinary skill in the art will understand that each block of the flowchart illustrations and/or block diagrams, as well as combinations of blocks in the flowchart illustrations and/or block diagrams, can be implemented by computer logic (e.g., computer program instructions, hardware logic, a combination of the two, etc.). Generally, computer program instructions may be provided to a processor(s) of a general-purpose computer, special-purpose computer, or other programmable data processing apparatus. Moreover, the execution of such computer program instructions using the processor(s) produces a machine that can carry out a function(s) or act(s) specified in the flowchart and/or block diagram block or blocks.

The flowchart and block diagrams in the Figures illustrate the architecture, functionality and/or operation of possible implementations of various embodiments of the present disclosure. In this regard, each block in the flowchart or block diagrams may represent a module, segment or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

It is to be understood that the above description is intended to be illustrative, and not restrictive. Many other implementation examples are apparent upon reading and understanding the above description. Although the disclosure describes specific examples, it is recognized that the systems and methods of the disclosure are not limited to the examples described herein, but may be practiced with modifications within the scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A firewall and/or security appliance provided between an external network or zone (network/zone) and an internal network/zone, the firewall and/or security appliance comprising:
a memory configured to store a plurality of programmable instructions; and
a processing device in communication with the memory, wherein the processing device, upon execution of the plurality of programmable instructions is configured to:
receive or transmit inbound messages of network traffic between the external network/zone and the internal network/zone at an external port connected to the external network/zone, wherein the external network/zone includes at least one external module that is capable of supporting or configured to support at least one secure protocol;
receive or transmit outbound messages of the network traffic at an internal port connected to the internal network/zone, wherein the internal network/zone includes a plurality of internal modules, at least one of which is not capable of supporting or configured to support the at least one secure protocol;
provide firewall and/or security protection for filtering and/or monitoring the network traffic; and
for an inbound message received at the external port from a source external module of the at least one external module, remove encryption and/or first applicable security aspects of the at least one secure protocol before transmitting the inbound message via the internal port to a destination internal module of the plurality of internal modules; and/or
for an outbound message received at the internal port from a source internal module of the plurality of internal modules, add encryption and/or second applicable security aspects of the at least one secure protocol before transmitting the outbound message via the external port to a destination external module of the at least one external module.

2. The firewall and/or security appliance of claim 1, wherein the processing device, upon execution of the plurality of programmable instructions, is further configured to:
store in association with identification of each of the plurality of internal modules an indication of the internal module's security capability for supporting the at least one secure protocol;
determine the security capability of the destination internal module identified in each inbound message; and
remove the encryption and/or the first applicable security aspects before transmitting the inbound message via the internal port to the destination internal module only if the determination of the security capability is that the destination internal module has inadequate security capability for processing the inbound message with the encryption and/or the first security aspects.

3. The firewall and/or security appliance of claim 1, wherein the processing device, upon execution of the plurality of programmable instructions, is further configured to:
store in association with identification of each of the plurality of internal modules an indication of the internal module's security capability for supporting the at least one secure protocol;
determine the security capability of a source module of the plurality of internal modules identified in each outbound message; and
add the encryption and/or the second applicable security aspects before transmitting the outbound message via the external port to a destination external module of the at least one external module only if the determination of the security capability is that the source internal module has inadequate security capability for providing the outbound message with the encryption and/or the first applicable security aspects.

4. The firewall and/or security appliance of claim 1, wherein the external network/zone and internal network/zone are included within an operational technologies (OT) system.

5. The firewall and/or security appliance of claim 4, wherein the at least one external module includes at least one supervisory and/or control module and/or one or more other modules that are not included in the internal network/zone.

6. The firewall and/or security appliance of claim 4, wherein the plurality of internal modules are operational-technology modules.

7. An operational technologies (OT) system comprising:
an external network/zone having at least one external module that is capable of supporting or configured to support at least one secure protocol;
an internal network/zone having a plurality of internal modules, at least one of which is not capable of supporting or configured to support the at least one secure protocol;
a firewall and/or security appliance comprising:
a memory configured to store a plurality of programmable instructions; and
a processing device in communication with the memory, wherein the processing device, upon execution of the plurality of programmable instructions is configured to:
receive or transmit inbound messages of network traffic between the external network/zone and the internal network/zone at an external port connected to the external network/zone;
receive or transmit outbound messages of the network traffic at an internal port connected to the internal network/zone;
provide firewall protection for filtering and/or monitoring network traffic between the external network/zone and the internal network/zone; and
for an inbound message received at the external port from a source external module of the at least one external module, remove encryption and/or first security aspects of the at least one secure protocol before transmitting the inbound message via the internal port to a destination internal module of the plurality of internal modules; and/or
for an outbound message received at the internal port from a source internal module of the plurality of internal modules, add encryption and/or second applicable security aspects of the at least one secure protocol before transmitting the outbound message via the external port to a destination external module of the at least one external module.

8. The OT system of claim 7, wherein the processing device, upon execution of the plurality of programmable instructions, is further configured to:
store in association with identification of each of the plurality of internal modules an indication of the internal module's security capability for supporting the at least one secure protocol;
determine the security capability of the destination internal module identified in each inbound message; and
remove the encryption and/or the first applicable security aspects before transmitting the inbound message via the internal port to the destination internal module only if the determination of the security capability is that the destination internal module has inadequate security capability for processing the inbound message with the encryption and/or the first security aspects.

9. The OT system of claim 7, wherein the processing device, upon execution of the plurality of programmable instructions, is further configured to:
store in association with identification of each of the plurality of internal modules an indication of the internal module's security capability for supporting the at least one secure protocol;
determine the security capability of a source module of the plurality of internal modules identified in each outbound message; and
add the encryption and/or the second applicable security aspects before transmitting the outbound message via the external port to a destination external module of the at least one external module only if the determination of the security capability is that the source internal module has inadequate security capability for providing the outbound message with the encryption and/or the second applicable security aspects.

10. The OT system of claim 7, wherein the at least one external module includes at least one supervisory and/or control module and/or one or more other modules that are not included in the internal network/zone.

11. The OT system of claim 7, wherein the plurality of internal modules are operational-technology modules.

12. A method of protecting network traffic between an external network or zone (network/zone) and an internal network/zone, the method comprising:
receiving or transmitting inbound messages of the network traffic from or to the external network/zone, wherein the external network/zone includes at least one external module that is capable of supporting or configured to support at least one secure protocol;
receiving or transmitting outbound messages of the network traffic from or to the internal network/zone, wherein the internal network/zone includes a plurality of internal modules, at least one of which is not capable of supporting or configured to support the at least one secure protocol;
providing firewall and/or security protection for filtering and/or monitoring the network traffic; and
for an inbound message received from a source external module of the at least one external module, remove encryption and/or first applicable security aspects of the at least one secure protocol before transmitting the inbound message to a destination internal module of the plurality of internal modules; and/or
for an outbound message received from a source internal module of the plurality of internal modules, add encryption and/or second applicable security aspects of the at least one secure protocol before transmitting the outbound message to a destination external module of the at least one external module.

13. The method of claim 12, further comprising:
storing in association with identification of each of the plurality of internal modules an indication of the internal module's security capability for supporting the at least one secure protocol; and
determining the security capability of the destination internal module identified in each inbound message,
wherein the encryption and/or the first applicable security aspects is removed before transmitting the inbound message to the destination internal module only if the determination of the security capability is that the destination internal module has inadequate security capability for processing the inbound message with the encryption and/or the first security aspects.

14. The method of claim 12, further comprising:
storing in association with identification of each of the plurality of internal modules an indication of the internal module's security capability for supporting the at least one secure protocol; and
determining the security capability of a source module of the plurality of internal modules identified in each outbound message,
wherein the encryption and/or the second applicable security aspects is added to the outbound message before transmitting the outbound message to the destination external module only if the determination of the security capability is that the source internal module has inadequate security capability for providing the outbound message with the encryption and/or the second applicable security aspects.

15. The method of claim 12, wherein the external network/zone and internal network/zone are included within an operational technologies (OT) system.

16. The method of claim 15, wherein the at least one external module includes at least one supervisory and/or control module and/or one or more other modules that are not included in the internal network/zone.

17. The method of claim 15, wherein the plurality of internal modules are operational-technology modules.
